# EUROPÄISCHE PATENTSCHRIFT

(11) **EP 1 152 936 B1**
(45) Veröffentlichungstag und Bekanntmachung des Hinweises auf die Patenterteilung: **03.12.2003**
(21) Anmeldenummer: 00910633.7
(22) Anmeldetag: 31.01.2000
(51) Int. Cl.: B60T 8/36, F15B 21/04

(54) **DRUCKSTEUERGERÄT**
PRESSURE CONTROL DEVICE
DISPOSITIF DE REGULATION DE LA PRESSION

(30) Priorität: 01.02.1999 DE 19903930; 01.02.1999 DE 19903931; 03.05.1999 DE 19920171
(43) Veröffentlichungstag der Anmeldung: 14.11.2001
(73) Patentinhaber: Continental Teves AG & Co. oHG, 60488 Frankfurt (DE)
(72) Erfinder: DINKEL, Dieter, D-65817 Eppstein (DE); REINARTZ, Hans-Dieter, D-60439 Frankfurt (DE)
(86) Internationale Anmeldenummer: EP0000761
(87) Internationale Veröffentlichungsnummer: WO00046089

(56) Entgegenhaltungen:
- WO-A-96/33081
- DE-A- 3 709 189
- DE-A- 19 902 033
- DE-U- 9 102 352
- DE-U- 29 712 033
- GB-A- 1 345 087

## Beschreibung

Die Erfindung betrifft ein Drucksteuergerät für radschlupfgeregelte hydraulische Kraftfahrzeugbremsanlagen, das insbesondere mit Mitteln zum automatischen Bremseneingriff ausgestattet ist, nach dem Oberbegriff des Patentanspruchs 1.

Aus der DE 37 09 189 A1 ist bereits ein Drucksteuergerät für eine radschlupfgeregelte hydraulische Kraftfahrzeugbremsanlage bekannt geworden, die zur Beheizung der in einem blockförmigen Gehäuse angeordneten Ventile eine Heizeinrichtung vorsieht, die entweder als elektrische Widerstandsheizung in Form einer Heizpatrone in den Ventilblock gerichtet ist oder die die Kühlwasserwärme eines Verbrennungsmotors zur Beheizung einer Durchflußbohrung im Ventilblock nutzt. Die vorgeschlagenen Heizeinrichtungen erweisen sich als aufwendig und wenig praktikabel.

In der DE 297 12 033 U wird ein Motor-Pumpen-Aggregat vorgeschlagen, insbesondere für eine Kraftfahrzeug-Antiblockier-Bremsvorrichtung, das ein leistungsintensives Bauteil einer elektronischen Regel- und/oder Steuerschaltung aufweist, welches örtlich von der Regel- und/oder Steuerschaltung getrennt gut wärmeleitend in der Nähe des Pumpengehäuses angeordnet ist, um das Pumpengehäuse als Kühlkörper auf das leistungsintensive, wärmeerzeugende Bauteil einwirken zu lassen.

Ferner geht aus der DE 91 02 352 U eine hydraulische Kraftfahrzeugbremsanlage mit Antriebsschlupfregelung hervor, die eine zu einer Pumpe führende Ansaugleitung aufweist, welche mit einem elektrischen Heizleiter, Kaltleiter oder einem beheizbaren Schlauch versehen ist.

Daher ist es die Aufgabe der vorliegenden Erfindung, ein Drucksteuergerät der eingangs genannten Art dahingehend zu verbessern, daß mit möglichst einfachen, kostengünstigen Mitteln eine besonders effektive Beheizung bestimmter Stellen des Drucksteuergerätes erfolgt.

Diese Aufgabe wird erfindungsgemäß für ein Drucksteuergerät der gattungsbildenden Art mit den kennzeichnenden Merkmalen des Patentanspruchs 1 gelöst.

Weitere Merkmale, Vorteile und Anwendungsmöglichkeiten der Erfindung gehen im nachfolgenden anhand der Beschreibung einiger Ausführungsbeispiele hervor.

Es zeigen:
- Fig. 1: eine räumliche Darstellung einer Gehäuse-Ausführungsform für ein Drucksteuergerät,
- Fig. 2: eine Seitenansicht der erfindungswesentlichen Einzelheiten für das Drucksteuergerät nach Fig. 1 in einer Gesamtdarstellung,
- Fig. 3: eine Seitenansicht des aus Fig. 2 bekannten Drucksteuergerätes in einer alternativen Ausführungsform eines Heizelementes in koaxialer Anordnung zur Elektromotorenachse.

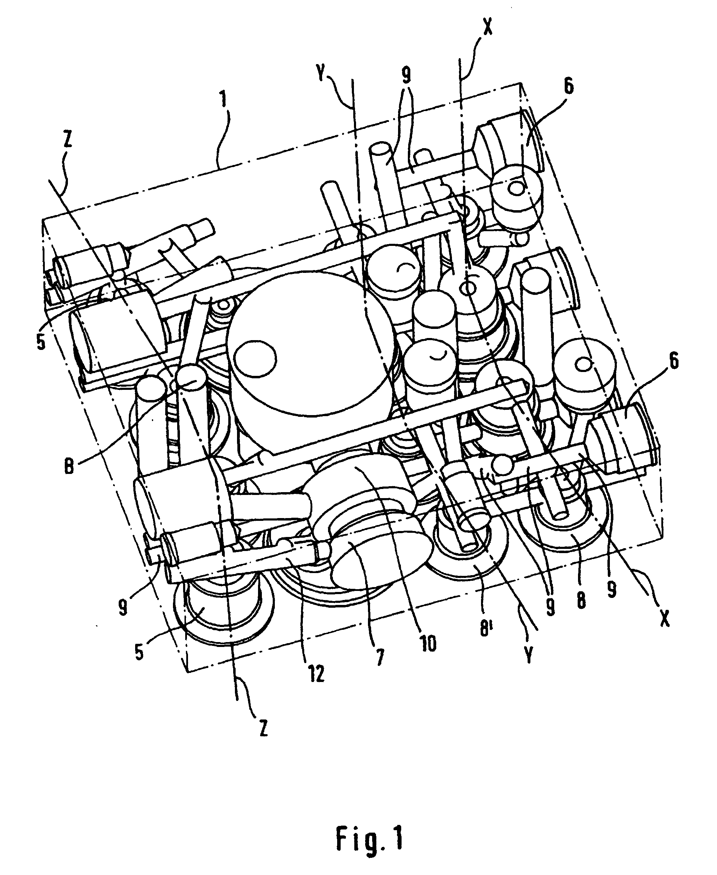

Die Fig. 1 zeigt eine räumliche Ansicht des Gehäuses 1 für eine zweckmäßige Ausführungsform des hydromechanischen Teils des Drucksteuergeräts. Die Blockverbohrung des Gehäuses 1 dient zur Aufnahme von Drucksteuerventilen und einem Elektromotor 11 zum Antrieb einer Pumpe 10 im Gehäuse 1. Der Pumpe 10 ist eine Pumpenbohrung 7 zugeordnet. In einer ersten Ventilreihe X im Gehäuse 1 befinden sich die Ventilaufnahmebohrungen 8 für die elektromagnetisch betätigbaren Einlaßventile. Parallel dazu sind in einer zweiten Ventilreihe Y die Ventilaufnahmebohrungen 8' für die elektromagnetisch betätigbaren Auslaßventile vorgesehen. Durch die Aufnahmebohrungen für die Pumpe sind beide vorgenannten Ventilreihen X,Y von einer dritten Ventilreihe Z beabständet, die mehrere Ventilaufnahmebohrungenbohrungen 5 für elektrische Umschaltventile und Trennventile vorsieht. Die Ventile der dritten Ventilreihe Z ermöglichen mit der gezeigten Blockverbohrung eine Antriebsschlupfregelung als auch einen automatischen Bremsenbetrieb, beispielsweise zur Fahrdynamikregelung. In die rechte Seitenfläche des Gehäuses 1 münden für beide durch die Blockverbohrung gebildeten Bremskreisabschnitte entsprechende Bremsdruckgeberanschlüsse 6 ein, die über die Druckmittelkanäle im Gehäuse 1 eine Verbindung zu den Ventilaufnahmebohrungen 8, 8' der Ventilreihe X,Y als auch zu den Ventilaufnahmebohrungen 5 der Ventilreihe Z herstellen.

Die für die Erfindung besonders relevante Anordnung des Heizelementes 4 in einer Öffnung 5 wird im nachfolgenden beschrieben.

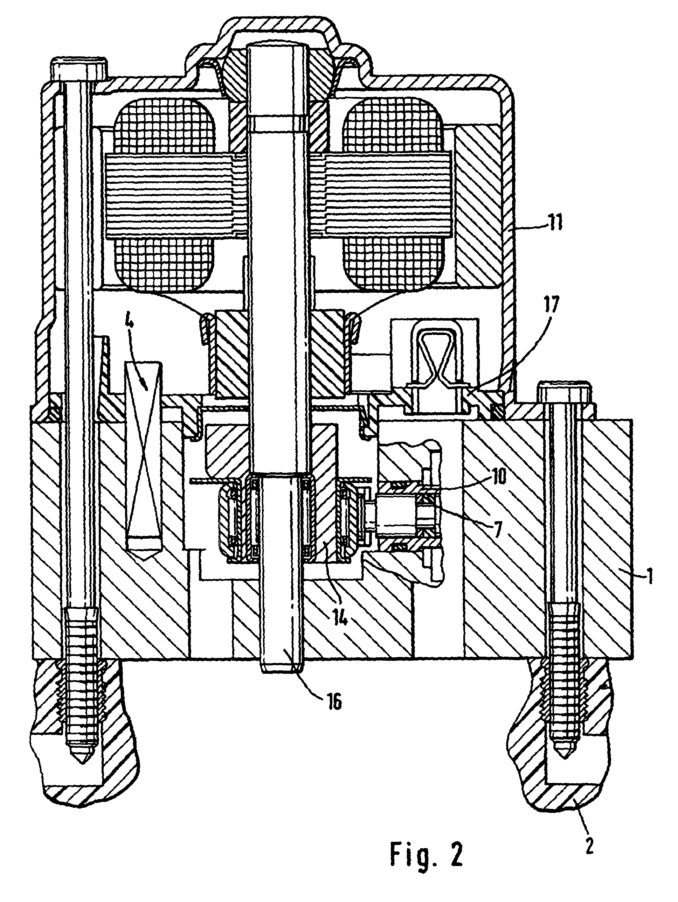

Vornehmlich beheizt werden sollen die beiden in den Ventilaufnahmebohrungen 5 der Ventilreihe Z einzusetzenden elektrischen Umschaltventile. Nicht dargestellt ist das zur Beheizung in die Öffnungen B jeweils einzusetzende, vorzugsweise stab- oder plattenförmige Heizelement 4, das der nachfolgenden Darstellung nach Figur 2 zu entnehmen ist. Im einzelnen ist hierbei entsprechend der Darstellung nach Fig. 1 eine zentrale Anordnung der Öffnung B zwischen den Ventilaufnahmebohrungen 5 im Gehäuse 1 vorgesehen, die eine möglichst gute Wärmeübertragung sowohl in Richtung der Ventilaufnahmebohrung 5 als auch in Richtung des zur Ventilaufnahmebohrung 5 führenden Saugkanals 9 gewährleistet. Die Anordnung der Öffnung B sorgt zwangsläufig auch für ein entsprechendes Beheizen des Pumpensaugbereichs, so daß sämtliche viskositäts- und damit temperaturrelevante Strömungsabschnitte im Gehäuse 1, die im Betrieb des Drucksteuergeräts einen ausgeprägten hydraulischen Strömungswiderstand darstellen, gezielt beheizt werden können. Besonders vorteilhaft zeigt sich bei der vorgeschlagenen Gehäuseverbohrung die Tatsache, daß die Öffnung B in der Praxis nur durch eine geringen Abstand vom Saugkanal 9 getrennt ist, womit durch die Kanalnähe eine gleichmäßige Wärmeübertragung auf den Saugkanal 9 gewährleistet ist. Die Erfindung schlägt ferner vor, die Öffnung B in etwa senkrecht und in etwa mittig zwischen der vorangenannten Ventilreihe Z in das Gehäuse 1 einmünden zu lassen. Die Darstellung offenbart somit eine optimale Blockverbohrung zur Beheizung der Ventilaufnahmebohrung 5 und des Pumpensaugkanals 12 eines jeden Bremskreises. Wie ersichtlich ist, handelt es sich um ein Drucksteuergerät für Zweikreisbremsanlagen, sodaß alle im Gehäuse 1 des ersten Bremskreisabschnitts angeordneten Bohrungen spiegelsymetrisch im zweiten Bremskreisabschnitt vorzufinden sind, auch wenn sie nicht detailliert abgebildet sind.

Der Bestückung vorgenannter Öffnung B mit dem entsprechenden Heizelement 4 kommt entsprechende Bedeutung zu, wenn das Drucksteuergerät im Tieftemperaturenbetrieb der Bremsanlage eingesetzt wird, da durch die hohe Viskosität der Bremsflüssigkeit zwangsläufig besonders große hydraulische Strömungswiderstände in den vorbeschriebenen Bereichen des Gehäuses 1 auftreten, die ohne eine gezielte Beheizung des Saugbereichs zu einer erheblichen Verzögerung des durch die Pumpe zu erzeugenden Druckaufbaus führen können.

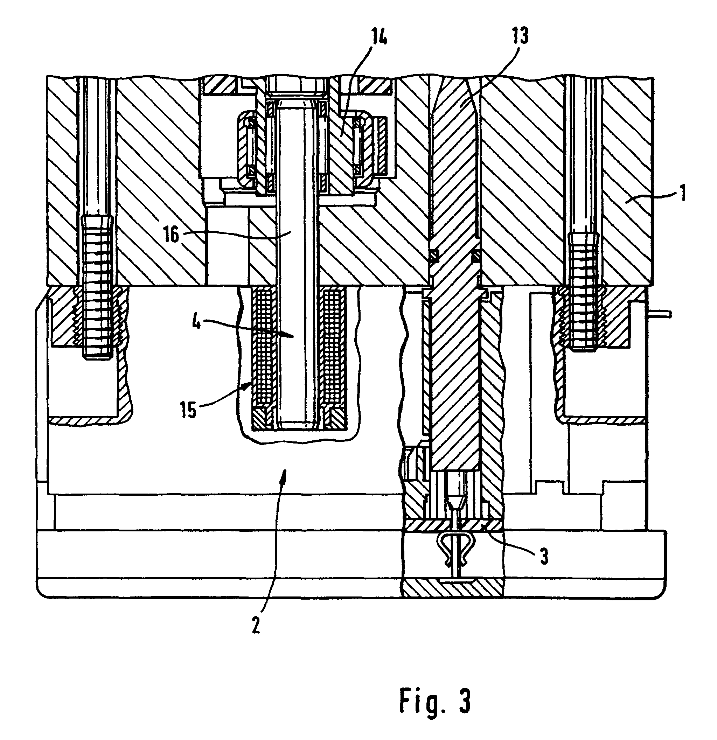

Bezugnehmend auf die Figur 1 zeigt die Fig. 2 eine vollständige Seitenansicht des mit dem Elektromotor 11 komplettierten Drucksteuergerätes, mit einem Gehäuseteilschnitt, der das Heizelement 4 in Form eines Heizstabes in der Öffnung B offenbart, die gemäß den vorangegangenen Darstellungen achsparallel zum Elektromotor 11 auf Höhe der Ventilreihe Z angeordnet ist. Durch diese Parallelanordnung wird in kürzester Zeit eine optimale Aufheizung der benachbarten Kanäle realisiert. Obwohl in der Figur 2 nur teilweise gezeigt, befindet sich auf das bereits in der Figur 1 beschriebene erste Gehäuse 1 aufgesetzt ein mit elektrischen und/oder elektronischen Bauelementen 3 ausgerüstetes, deckelförmiges zweites Gehäuse 2, das über eine geeignete elektrische Kontaktierung die erforderliche Verbindung zur Beheizung des Heizelementes 4 herstellt. Der hierzu vorgeschlagene Steckverbinder 13 (siehe Fig. 3), ermöglicht eine einfache Kontaktierung mit der Bürstenträgerplatte 17 des Elektromotors 11, an der auch das Heizelement 4 befestigt ist, sodaß sich eine sehr einfach zu montierende, vorgefertigte Baugruppe ergibt. Zweckmäßigerweise nimmt das Gehäuse 2 sämtliche, für eine Steuer- und Regelfunktion des Drucksteuergerätes erforderlichen elektronischen Bauelemente 3 auf, so daß der damit im Gehäuse 2 integrierte Regler mit seinen entsprechenden Leistungstreibern und Steuerungselementen nicht nur zum Zwecke der Beheizung des Heizelementes 4, sondern auch für die im Gehäuse 1 integrierten, mit seinen Magnetspulen in Richtung des Gehäuses 2 hervorstehenden Drucksteuerventile, als auch zum Antrieb des von ihm abgewandten, auf der entgegengelegenen Stirnseite des Gehäuses 1 angeordneten, das Heizelement 4 aufweisenden Elektromotor 11 ein zweckmäßiges elektronisches Steuerorgan bildet.

Selbstverständlich ist es auch möglich, losgelöst von der relativ hohen Integrationsdichte der elektronischen, elektrischen, hydraulischen und mechanischen Komponenten beispielsweise durch eine externe Stromquelle eine vom Gehäuse 2 unabhängige Bestromung des Heizelementes 4 sicherzustellen. Dies würde allerdings zu einem veränderten elektrischen Anschlußbild führen.

Abweichend von den vorangegangenen Darstellungen der Erfindung in den Figuren 1 und 2 soll nunmehr anhand der Fig. 3 eine alternative, gleichfalls effektive Beheizung der Kanäle im Gehäuse 1 beschrieben werden, die eine unmittelbare Wärmeübertragung durch das Heizelement 4 auf das Gehäuse 1 im Bereich der Motorachse 16 gewährleistet. Hierzu wird nach der Ausführung gemäß der Fig. 3 vorgeschlagen, das Gehäuse 1 über eine auf der Motorachse 16 aufgesetzte Heizspule 15 zu beheizen. Die Wärmeeinleitung erfolgt dabei über die in den Raum im Gehäuse 2 hervorstehende Motorachse 16, die gleichzeitig in der Pumpen- und Motoraufnahmebohrung des Gehäuses 1 den Exzenterantrieb 14 für die Betätigung der Pumpkolben aufnimmt. Das Heizelement 4 ist folglich aus der Heizspule 15 und der stabförmigen Motorachse 16 gebildet, die koaxial zur Motorwelle im ersten Gehäuse 1 fixiert ist. Die elektrische und mechanische Verbindung der Heizspule 15 und der erforderlichen Ventilspulen erfolgt vorzugsweise als im Gehäuse 2 integrierte Baugruppe, wobei auch die erforderliche Steuer- und Regelelektronik ein Bestandteil des Gehäuses 2 ist. Das Gehäuse 1 besteht als bevorzugter Wärmeträger zum Beispiel aus einer Leichtmetall-Legierung oder auch aus Stahl. Soweit aus Fig. 3 nicht alle Einzelheiten des Drucksteuergerätes hervorgehen, entsprechen diese der Darstellung nach Fig. 2.

Schließlich ist von Bedeutung, daß Bauteile der elektromagnetisch betätigbaren Drucksteuerventile innerhalb der Ventilaufnahmebohrungen 8, 8', 5 des blockförmigen Gehäuses 1 eine hydraulische Komponente bilden, während der elektromechanische Ansteuerkreis mit den Ventilspulen und der Heizspule 15 Bestandteil des Gehäuses 2 sind, das elektrische als auch elektronische Bauteile 3 zum Betrieb des Drucksteuergerätes aufnimmt, so daß das deckelförmige Gehäuse 2 die elektrischen als auch die elektronischen Komponenten beinhaltet. Folglich ergibt sich im Gehäuse 2 eine elektromechanische als auch elektronische, vormontierte Einheit. Die Kontaktierung des Heizspule 15 am elektronischen Regler erfolgt vorzugsweise durch Löten oder in Form einer Steckverbindung mit der elektrischen Schaltung, die als Leiterplatte, Leiterfolie oder auch als Stanzgitter ausgeführt ist.

Bei der voranbeschriebenen Ausführungsform nach Fig. 1 und 2 kann im einfachsten Fall das Heizelement 4 als ummantelter Widerstandsheizstab oder auch als Kaltleiter, sogenanntes PTC-Element, ausgeführt sein. Zur besseren Wärmeübertragung zwischen dem Heizelement 4 und der aus Richtung des Motorflanschs senkrecht in das Gehäuse 1 einmündenden Öffnung B kann überdies bei Bedarf eine Wärmeleitpaste in die Öffnung B eingebracht werden. Durch die im deckelförmigen Gehäuse 2 primär bereits integrierte Steuer- und/oder Regelelektronik läßt sich unter Umgehung aufwendiger externer Kabelstränge nicht nur die zum Betrieb des Drucksteuergerätes notwendigen Bremsdruckregelfunktionen realisieren, sondern auch die zum Betrieb der Heizelemente 4 erforderliche Elektronik oder Elektrik, inklusive einer Temperaturerfassungs- und Regeleinrichtung.

Mit der Montage des Elektromotors 11 am ersten Gehäuse 1 gelangt gemäß der Figur 2 zwangsläufig auf einfache Weise das an der Bürstenträgerplatte 17 vormontierte Heizelement 4 in die Öffnung B des Gehäuses 1, wobei über den das Gehäuse 1 durchdringenden elektrischen Steckverbinder 13 die Bürstenträgerplatte 17 mit dem im Gehäuse 2 befindlichen elektronischen Regler auf einfache Weise elektrisch verbunden ist.

In allen voran dargestellten Ausführungsformen der Erfindung werden im wesentlichen stabförmige Heizelemente 4 vorgeschlagen. Dies stellt jedoch bezüglich der Fig. 2 nur eine der möglichen Varianten dar. Geometrische Abwandlungen des Heizelementes 4 in Form von plattenförmigen oder spiralförmigen Heizelementen 4 sind je nach Anwendungsfall denkbar, ohne jedoch die grundlegende Idee der Erfindung zu verlassen.

### Bezugszeichenliste

- 1: Erstes Gehäuse
- 2: Zweites Gehäuse
- 3: Bauelemente
- 4: Heizelement
- 5: Ventilaufnahmebohrung
- 6: Bremsdruckgeberanschluß
- 7: Pumpenbohrung
- 8,8': Ventilaufnahmebohrung
- 9: Saugkanal
- 10: Pumpe
- 11: Elektromotor
- 12: Pumpensaugkanal
- 13: Steckverbinder
- 14: Exzenterantrieb
- 15: Heizspule
- 16: Motorachse
- 17: Bürstenträgerplatte
- B: Öffnung

## Patentansprüche

1. Drucksteuergerät für radschlupfgeregelte hydraulische Kraftfahrzeugbremsanlagen, das insbesondere zum Betrieb im automatischen Bremseneingriff geeignet ist, mit einem ersten Gehäuse (1) zur Aufnahme von Druckmittelkanälen, in die Drucksteuerventile und/oder Pumpenelemente eingesetzt sind, mit einem am ersten Gehäuse (1) angeordneten zweiten Gehäuse (2) zur Aufnahme von mit den Drucksteuerventilen verbundenen elektrischen und/oder elektronischen Bauelementen (3), sowie mit einem Elektromotor (11) zum Antrieb der Pumpenelemente, **dadurch gekennzeichnet, daß** in dem ersten Gehäuse (1) wenigstens ein Heizelement (4) vorgesehen ist, das mit den elektrischen und/oder elektronischen Bauelementen (3) im zweiten Gehäuse (2) verbunden ist, und daß sich das Heizelement (4) in einem Bereich des ersten Gehäuses (1) befindet, der hydraulische Kanäle zur Speisung der Pumpenelemente und wenigstens ein Umschaltventil aufweist, wobei die Kanäle einen hydraulischen Strömungswiderstand darstellen.

2. Drucksteuergerät nach Anspruch 1, **dadurch gekennzeichnet, daß** der hydraulische Strömungswiderstand durch ein in eine Ventilaufnahmebohrung (5) eingesetztes Drucksteuerventil gebildet ist, das als das Umschaltventil ausgebildet ist, das vorzugsweise eine schaltbare hydraulische Verbindung zwischen einem am ersten Gehäuse (1) einmündenden Bremsdruckgeberanschluß (6) und einer im ersten Gehäuse (1) angeordneten Pumpenbohrung (7) herstellt.

3. Drucksteuergerät nach Anspruch 1, **dadurch gekennzeichnet, daß** der hydraulische Strömungswiderstand durch eine in einer Pumpenbohrung (7) befindliche Pumpe gebildet ist, die stromabwärts zur hydraulischen Verbindung eines zur Ventilaufnahmebohrung (5) führenden Bremsdruckgeberanschlusses (6) angeordnet ist.

4. Drucksteuergerät nach Anspruch 1, **dadurch gekennzeichnet, daß** der hydraulische Strömungswiderstand durch einen Saugkanal (9) gebildet ist, der am ersten Gehäuse (1) einen Bremsdruckgeberanschluß (6) mit einer im ersten Gehäuse (1) befindlichen Ventilaufnahmebohrung (5) verbindet, in die das als Umschaltventil ausgebildete Drucksteuerventil eingesetzt ist.

5. Drucksteuergerät nach Anspruch 1, **dadurch gekennzeichnet, daß** eine Öffnung (B) im trockenen Bereich des ersten Gehäuses (1) angeordnet ist und als parallel oder quer zu den Druckmittelkanälen führende Sacklochbohrung ausgebildet ist.

6. Drucksteuergerät nach Anspruch 1, **dadurch gekennzeichnet, daß** das Heizelement (4) als Widerstandsheizung ausgeführt ist.

7. Drucksteuergerät nach Anspruch 1, **dadurch gekennzeichnet, daß** das Heizelement (4) als PTC-Element ausgeführt ist.

8. Drucksteuergerät nach Anspruch 1, **dadurch gekennzeichnet, daß** das Heizelement (4) als Heizstab ausgebildet ist, der am Elektromotor (11) befestigt ist und der sich beim Zusammenfügen beider Gehäuse (1,2) in die Öffnung (B) des ersten Gehäuses (1) möglichst spielfrei erstreckt.

9. Drucksteuergerät nach Anspruch 1, **dadurch gekennzeichnet, daß** das Heizelement (4) aus einer Heizspule (15) und einer in das zweite Gehäuse (2) hervorstehenden Motorachse (16) gebildet ist, die in einer Pumpen- und Motoraufnahmebohrung des ersten Gehäuses (1) einen Exzenterantrieb (14) für die Betätigung der Pumpenelemente aufnimmt, wobei die Heizspule (15) als im zweiten Gehäuse (2) integrierte Baugruppe ausgebildet ist.

## Claims

1. Pressure control device for hydraulic automotive vehicle brake systems with wheel slip control which is especially suited for an operation in the automatic brake intervention, with a first housing (1) for accommodating pressure fluid channels into which pressure control valves and/or pump elements are inserted, with a second housing (2) arranged on the first housing (1) for the accommodation of electric and/or electronic structural elements (3) connected to the pressure control valves, as well as with an electric motor (11) for driving the pump elements,
**characterized in that** at least one heating element (4) provided in the first housing (1) is connected to the electric and/or electronic structural elements (3) in the second housing (2), and **in that** the heating element (4) is disposed in an area of the first housing (1) which includes hydraulic channels meant for the fluid supply to the pump elements, and at least one change-over valve, said channels representing a hydraulic flow resistance.

2. Pressure control device as claimed in claim 1,
**characterized in that** the hydraulic flow resistance is formed of a pressure control valve that is inserted into a valve-accommodating bore (5) and configured as a change-over valve, preferably providing a controllable hydraulic connection between a braking pressure generator port (6) opening at the first housing (1) and a pump bore (7) arranged in the first housing (1).

3. Pressure control device as claimed in claim 1,
**characterized in that** the hydraulic flow resistance is formed by a pump which is arranged in a pump bore (7) downstream of the hydraulic connection of a braking pressure generator port (6) that leads to the valve-accommodating bore (5).

4. Pressure control device as claimed in claim 1,
**characterized in that** the hydraulic flow resistance is formed by a suction channel (9) that connects at the first housing (1) a braking pressure generator port (6) to a valve-accommodating bore (5) in the first housing (1), into which bore the pressure control valve that is configured as a change-over valve is inserted.

5. Pressure control device as claimed in claim 1,
**characterized in that** an opening (B) is arranged in the dry zone of the first housing (1) and is configured as a blind-end bore leading in parallel or transversely to the pressure fluid channels.

6. Pressure control device as claimed in claim 1,
**characterized in that** the heating element (4) is configured as a resistance heating.

7. Pressure control device as claimed in claim 1,
**characterized in that** the heating element (4) is configured as a PTC element.

8. Pressure control device as claimed in claim 1,
**characterized in that** the heating element (4) is configured as a heating rod which is fastened to the electric motor (11) and extends with a smallest possible clearance into the opening (B) of the first housing (1) when the two housings (1, 2) are joined.

9. Pressure control device as claimed in claim 1,
**characterized in that** the heating element (4) is composed of a heating coil (15) and a motor axis (16) projecting into the second housing (2), said motor axis accommodating an eccentric drive (14) for actuating the pump elements in a pump and motor accommodating bore of the first housing (1), with the heating coil (15) being designed as a subassembly that is integrated in the second housing (2).

## Revendications

1. Dispositif de commande de pression, pour installation de freinage de véhicule automobile de type hydraulique à régulation de glissement de roue, qui convient notamment pour le fonctionnement en intervention de frein automatique, comprenant un premier boîtier (1), servant à loger des conduits d'agent de pression dans lesquels des valves de commande de pression et/ou des éléments de pompe sont placés, un second boîtier (2), disposé sur le premier boîtier (1) et servant à loger des composants électriques et/ou électroniques (3) reliés aux valves de commande de pression, et un moteur électrique (11) servant à entraîner les éléments de pompe, **caractérisé en ce que**, dans le premier boîtier (1), il est prévu au moins un élément chauffant (4) qui est relié aux composants électriques et/ou électroniques (3) situés dans le second boîtier (2) et **en ce que** l'élément chauffant (4) se trouve dans une zone du premier boîtier (1) qui comporte des conduits hydrauliques servant à l'alimentation des éléments de pompe et au moins une valve de commutation, les conduits constituant une résistance à l'écoulement hydraulique.

2. Dispositif de commande de pression suivant la revendication 1, **caractérisé en ce que** la résistance à l'écoulement hydraulique est formée par une valve de commande de pression qui est placée dans un alésage de logement de valve (5) et est réalisée sous forme d'une valve de commutation qui produit de préférence une liaison hydraulique commutable entre un raccord de capteur de pression de frein (6), débouchant sur le premier boîtier (1), et un alésage de pompe (7) disposé dans le premier boîtier (1).

3. Dispositif de commande de pression suivant la revendication 1, **caractérisé en ce que** la résistance d'écoulement hydraulique est formée par une pompe qui se trouve dans un alésage de pompe (7) et est disposée en aval vis-à-vis de la liaison hydraulique d'un raccord de capteur de pression de frein (6) menant à l'alésage de logement de valve (5).

4. Dispositif de commande de pression suivant la revendication 1, **caractérisé en ce que** la résistance d'écoulement hydraulique est formée par un conduit d'aspiration (9) qui, sur le premier boîtier (1), relie un raccord de capteur de pression de frein (6) à un alésage de logement de valve (5) qui se trouve dans le premier boîtier (1) et dans lequel est placée la valve de commande de pression réalisée sous forme d'une valve de commutation.

5. Dispositif de commande de pression suivant la revendication 1, **caractérisé en ce qu'**une ouverture (B) est disposée dans la zone sèche du premier boîtier (1) et est réalisée sous forme d'un alésage borgne menant d'une manière parallèle ou transversale aux conduits d'agent de pression.

6. Dispositif de commande de pression suivant la revendication 1, **caractérisé en ce que** l'élément chauffant (4) est réalisé en tant que chauffage par résistance.

7. Dispositif de commande de pression suivant la revendication 1, **caractérisé en ce que** l'élément chauffant (4) est réalisé sous forme d'un élément C.T.P.

8. Dispositif de commande de pression suivant la revendication 1, **caractérisé en ce que** l'élément chauffant (4) est réalisé sous forme d'une tige chauffante qui est fixée au moteur électrique (11) et qui, lors de l'assemblage des deux boîtiers (1, 2), s'étend le plus possible sans jeu dans l'ouverture (B) du premier boîtier (1).

9. Dispositif de commande de pression suivant la revendication 1, **caractérisé en ce que** l'élément chauffant (4) est formé d'une bobine de chauffage (15) et d'un axe de moteur (16) qui fait saillie dans le second boîtier (2) et sert à loger, dans un alésage de logement de pompe et de moteur du premier boîtier (1), un entraînement à excentrique (14) prévu pour l'actionnement des éléments de pompe, tandis que la bobine de chauffage (15) est réalisée sous forme d'un groupe structurel à intégrer dans le second boîtier (2).
